# EUROPEAN PATENT APPLICATION

(11) **EP 2 393 271 A1**
(43) Date of publication of application: **07.12.2011**
(21) Application number: 11168778.6
(22) Date of filing: 06.06.2011
(51) Int. Cl.: H04M 11/06, H04Q 1/14, H04M 3/30

(54) **Signal splitting circuit and signal splitter**

(30) Priority: 07.06.2010 CN 201020218838 U
(71) Applicant: Tyco Electronics (Shanghai) Co., Ltd., Waigaoqiao Free Trade Zone Shanghai (CN)
(72) Inventor: Zhang, Weili, Shanghai 200233 (CN); Yin, Hongjun, Shanghai 200233 (CN)
(74) Representative: Grünecker, Kinkeldey, Stockmair & Schwanhäusser

(57) **Abstract**

The present utility model provides a signal splitting circuit and a signal splitter comprising the circuit, which enable simultaneous test of multiple signals in addition to signal splitting function, by adding switches and test interfaces to the prior art signal splitter. In particular, the present utility model enables test of data signal/speech signal separately from other circuits.

## Description

### Field of the Utility Model

The present utility model relates to a field of communication device, and particularly relates to a signal splitting circuit and a signal splitter comprising the circuit.

### Background of the Utility Model

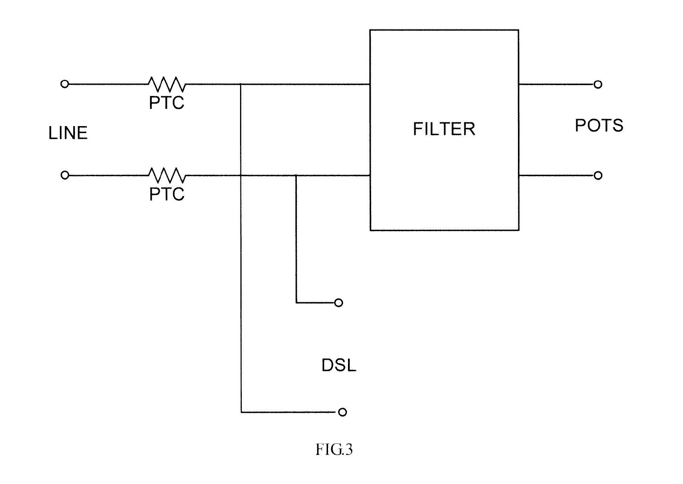

The signal splitter is widely used in the field of communication, for separating a speech signal and a data signal from a mix signal comprising the speech and the data signal. Fig.3 shows a prior art signal splitter, comprising a low-pass filter, a mix signal input of which is connected with a data signal output DSL, and also connected with a mix signal input interface LINE via a PTC resistor (positive temperature coefficient thermal resistor) for overcurrent protection. A speech signal output of the low-pass filter is connected with a speech signal output interface POTS. The low-pass filter receives at the mix signal input a mix signal inputted from the mix signal input interface LINE, removes high-frequency components from the inputted mix signal, and outputs a low-frequency speech signal from the speech signal output to the speech signal output interface POTS. The data signal output interface DSL is for outputting a data signal.

However, in practical use, the mix signal and/or the data signal and/or the speech signal often need to be tested in field simultaneously or individually. The existing signal splitter does not have corresponding test interfaces, and the test has to be conducted by connecting/disconnecting the circuits, and thus is very inconvenient. Furthermore, the existing signal splitter typically can only test one of the speech, data, and speech/data signals, rather than testing multiple signals simultaneously, or testing the data/speech signal separately while being isolated from other circuits.

### Summary of the Utility Model

The object of the present utility model is to solve at least one of the above problems and disadvantages of the prior art.

A first aspect of the present utility model provides a signal splitting circuit, comprising:
a filter comprising a mix signal input for receiving a mix signal comprising a speech signal and a data signal and a speech signal output for outputting the speech signal separated from the mix signal;
a mix signal input interface connected with the mix signal input;
a speech signal output interface; and
a data signal output interface,
characterized in that:
   the signal splitting circuit further comprises a mix signal test interface, a speech signal test interface, a data signal test interface, a switch and a further switch, wherein:
      the mix signal input interface is connected with the mix signal test interface;
the speech signal output interface is connected with the speech signal output or the speech signal test interface via the switch according to an operation mode of the switch; and
the data signal output interface is connected with the mix signal input or the data signal test interface via the further switch according to an operation mode of the further switch.

In an embodiment, the mix signal input is connected with the mix signal input interface via an overcurrent protection device.

In an embodiment, the switch and the further switch respectively comprise two single-pole double-throw switches or one double-pole double-throw switch.

A second aspect of the present utility model provides a signal splitter, comprising: a circuit board, characterized in that the signal splitter further comprises the signal splitting circuit according to the first aspect of the present utility model, wherein:
the signal splitting circuit is arranged on the circuit board;
an upper portion of the circuit board comprises a first pair and a second pair of contacts, wherein the first pair of contacts constitute the mix signal test interface, and the second pair of contacts constitute the data signal test interface;
the circuit board further comprises a third pair, a fourth pair, and a fifth pair of contacts, wherein the third pair of contacts constitute the mix signal input interface, the fourth pair of contacts constitute the speech signal output interface, and the fifth pair of contacts constitute the data signal output interface; and
the circuit board further comprises a audio jack, a dip switch, or a connector for providing the switch and the speech signal test interface.

In an embodiment, the first pair and the second pair of contacts are two pairs of contacts on a front side and a back side of the circuit board.

In an embodiment, the signal splitter further comprises a wiring module, a further connector and a backboard, wherein the circuit board is connected with the wiring module, the third pair and the fourth pair of contacts are connected with wire clamps on the wiring module, a lower portion of the circuit board is connected with the backboard via the further connector, and the fifth pair of contacts are connected with terminals on the backboard.

A third aspect of the present utility model provides a signal splitter, comprising: a circuit board, characterized in that the signal splitter further comprises the signal splitting circuit according to the first aspect of the present utility model, wherein:
the signal splitting circuit is arranged on the circuit board;
an upper portion of the circuit board comprises a first pair and a second pair of contacts, wherein the first pair of contacts constitute the mix signal test interface, and the second pair of contacts constitute the speech signal test interface;
the circuit board further comprises a third pair, a fourth pair, and a fifth pair of contacts, wherein the third pair of contacts constitute the mix signal input interface, the fourth pair of contacts constitute the speech signal output interface, and the fifth pair of contacts constitute the data signal output interface; and
the circuit board further comprises a audio jack, a dip switch, or a connector for providing the further switch and the data signal test interface.

In an embodiment, the first pair and the second pair of contacts are two pairs of contacts on a front side and a back side of the circuit board.

In an embodiment, the signal splitter further comprises a wiring module, a further connector and a backboard, wherein the circuit board is connected with the wiring module, the third pair and the fourth pair of contacts are connected with wire clamps on the wiring module, a lower portion of the circuit board is connected with the backboard via the further connector, and the fifth pair of contacts are connected with terminals on the backboard.

The signal splitting circuit and the signal splitter comprising the circuit according to the present utility model enable simultaneous test of multiple signals in addition to signal splitting function. In particular, the present utility model enables test of data signal/speech signal separately from other circuits.

### Brief Description of the Drawings

Embodiments of the present utility model will be described by way of example with reference to the figures, wherein similar reference signs in the exemplary figures represent similar elements. In the figures:
Fig.1 is a circuit diagram showing a signal splitter according to an embodiment of the present utility model;
Fig.2A is a structural diagram showing a signal splitter according to an embodiment of the present utility model;
Fig.2B is a diagram of a front face of the signal splitter according to an embodiment of the present utility model;
Fig.2C is a diagram of a side face of the signal splitter according to an embodiment of the present utility model; and
Fig.3 is a diagram of a prior art signal splitter.

### Detailed Description of the Embodiments

Specific implementations of the present utility model will be described with reference to particular embodiments. The structure, advantages, and effect of the present utility model will be apparent to those skilled in the art from the disclosure of following embodiments.

The present utility model can also be implemented or utilized by way of other embodiments, and the details of the specification can be modified and changed in accordance with various views and applications without departing from the inventive spirit of the present utility model.

Furthermore, the figures are simplified diagrams, which explain the basic principle of the present utility model by way of example. The figures only show components that are relative to the present utility model and the figures are not drawn exactly according to the number of components, shape, and size in actual application. The shape, number, and scale of the components in actual application can be varied as required, and the layout thereof may be more complex.

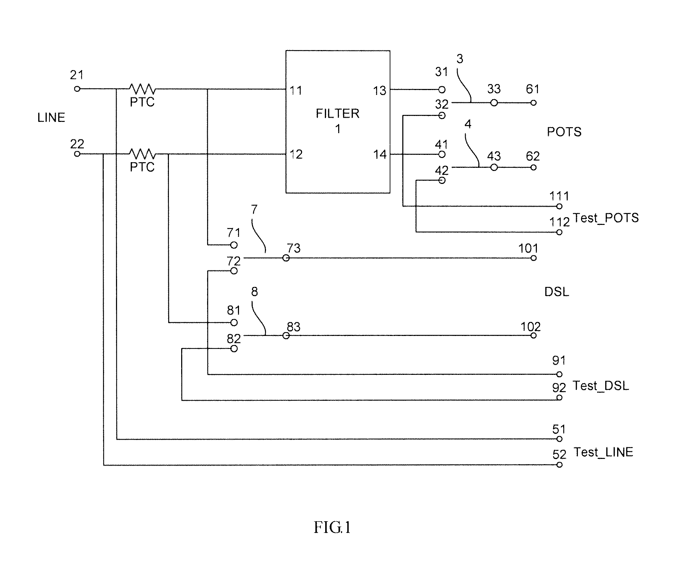

As shown in Fig.1, a splitting circuit according to an embodiment of the present utility model comprises a filter 1, for separating a low-frequency speech signal from an inputted mix signal and outputting the speech signal.

The filter 1 comprises a first input pin 11, a second input pin 12, a first output pin 13, and a second output pin 14. The first input pin 11 and the second input pin 12 constitute a mix signal input of the filter 1. The first output pin 13 and the second output pin 14 constitute a speech signal output of the filter 1. The filter 1 receives a mix signal comprising a speech signal and a data signal via the mix signal input, separates the low-frequency speech signal and outputs the speech signal via the speech signal output. The first input pin 11 is connected with a first mix signal input terminal 21 via an overcurrent protection device such as a PTC resistor. The second input pin 12 is connected with a second mix signal input terminal 22 via a further PTC resistor. The first mix signal input terminal 21 and the second mix signal input terminal 22 constitute a mix signal input interface LINE.

The first output pin 13 is connected with a first contact 31 of the first single-pole double-throw switch 3. The second output pin 14 is connected with a first contact 41 of the second single-pole double-throw switch 4.

A second contact 32 of the first single-pole double-throw switch 3 is connected with a first speech signal test terminal 111. A second contact 42 of the second single-pole double-throw switch 4 is connected with a second speech signal test terminal 112. The first speech signal test terminal 111 and the second speech signal test terminal 112 constitute a speech signal test interface Test_POTS.

A third contact 33 of the first single-pole double-throw switch 3 is connected with a first speech signal output terminal 61. A third contact 43 of the second single-pole double-throw switch 4 is connected with a second speech signal output terminal 62. The first speech signal output terminal and the second speech signal output terminal constitute a speech signal output interface POTS.

The contact 31 or the contact 32 can be connected with the contact 33 by switching the connection state of the first single-pole double-throw switch 3. The contact 41 or the contact 42 can be connected with the contact 43 by switching the connection state of the second single-pole double-throw switch 4.

The first mix signal input terminal 21 and the second mix signal input terminal 22 are respectively connected with a first mix signal test terminal 51 and a second mix signal test terminal 52. The first mix signal test terminal 51 and the second mix signal test terminal 52 constitute a mix signal test interface Test_LINE.

The first input pin 11 of the filter 1 is connected with a first contact 71 of the third single-pole double-throw switch 7. The second input pin 12 is connected with a first contact 81 of the fourth single-pole double-throw switch 8.

A second contact 72 of the third single-pole double-throw switch 7 is connected with a first data signal test terminal 91. A second contact 82 of the fourth single-pole double-throw switch 8 is connected with a second data signal test terminal 92. The first data signal test terminal 91 and the second data signal test terminal 92 constitute a data signal test interface Test_DSL.

A third contact 73 of the third single-pole double-throw switch 7 is connected with a first data signal output terminal 101. A third contact 83 of the fourth single-pole double-throw switch 8 is connected with a second data signal output terminal 102. The first data signal output terminal 101 and the second data signal output terminal 102 constitute a data signal output interface DSL.

The contact 71 or the contact 72 can be connected with the contact 73 by switching the connection state of the third single-pole double-throw switch 7. The contact 81 or the contact 82 can be connected with the contact 83 by switching the connection state of the fourth single-pole double-throw switch 8.

Those skilled in the art will understand that the filter 1 can be any filter suitable for use in the signal splitter in this technical field. The first single-pole double-throw switch 3 and the second single-pole double-throw switch 4 as switches can be replaced by one double-pole double-throw switch. The third single-pole double-throw switch 7 and the fourth single-pole double-throw switch 8 as switches can also be replaced by one double-pole double-throw switch. The PTC resistor can be replaced with any suitable overcurrent protection device known in this technical field.

The operation of the signal splitting circuit according to the present utility model will be described with reference to Fig.1.

As shown in Fig.1, the mix signal input of the filter 1 receives a mix signal comprising a speech signal and a data signal via the mix signal input interface LINE, separates a low-frequency speech signal and outputs the speech signal via the speech signal output.

In case that the contact 33 is connected with the contact 31 by the first single-pole double-throw switch 3, and the contact 43 is connected with the contact 41 by the second single-pole double-throw switch 4, the speech signal output interface POTS is connected with the speech signal output of the filter, and the separated speech signal is outputted from the speech signal output interface POTS.

In case that the contact 33 is connected with the contact 32 by the first single-pole double-throw switch 3, and the contact 43 is connected with the contact 42 by the second single-pole double-throw switch 4, the speech signal output interface POTS is connected with the speech signal test interface Test_POTS, and the speech signal can be tested via the speech signal test interface Test_POTS separately from other circuits.

In case that the contact 73 is connected with the contact 71 by the third single-pole double-throw switch 7, and the contact 83 is connected with the contact 81 by the fourth single-pole double-throw switch 8, the data signal output interface DSL outputs the data signal. In case that the contact 73 is connected with the contact 72 by the third single-pole double-throw switch 7, and the contact 83 is connected with the contact 82 by the fourth single-pole double-throw switch 8, the data signal output interface DSL is connected with the data signal test interface Test_DSL, and the data signal can be tested via the data signal test interface Test_DSL separately from other circuits.

Furthermore, since the mix signal test interface Test_LINE is connected with the mix signal input interface LINE, the inputted mix signal can be tested by the mix signal test interface Test_LINE.

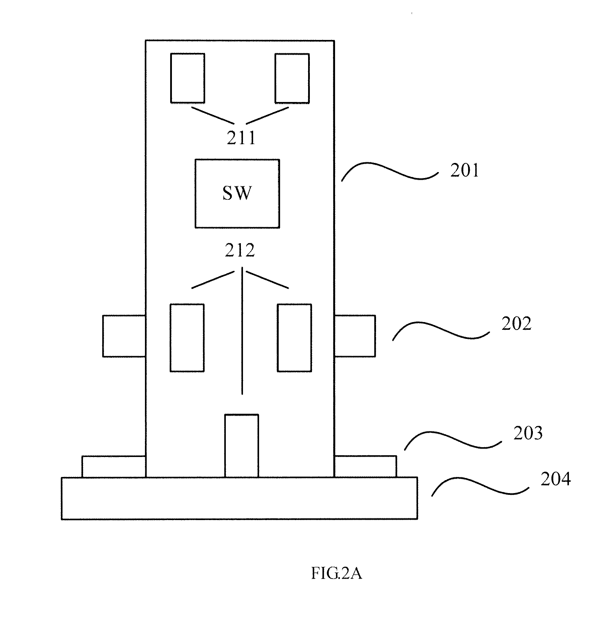

Fig.2A shows a structural diagram of a signal splitter according to an embodiment of the present utility model. The signal splitter comprises a circuit board 201, a wiring module 202, a connector 203, and a backboard 204.

As shown in Fig.2A, the circuit board 201 comprising the signal splitting circuit according to an embodiment of the present utility model has two contacts 211 on each of a front face and a back face on an upper portion of the circuit board 201, to provide the mix signal test interface Test_LINE and the data signal test interface Test_DSL. The correspondence between the four contacts and the first mix signal test terminal 51, the second mix signal test terminal 52, the first data signal test terminal 91, and the second data signal test terminal 92 is arbitrary.

The circuit board 201 further comprises a audio jack, a dip switch, or a connector SW to provide the first single-pole double-throw switch 3, the second single-pole double-throw switch 4, and the speech signal test interface Test_POTS.

Alternatively, a pair of contacts on the upper portion of the circuit board can be used as the speech signal test interface Test_POTS, and the audio jack, the dip switch, or the connector SW can be used to provide the third single-pole double-throw switch 7, the fourth single-pole double-throw switch 8, and the data signal test interface Test_DSL.

The first contact 31 has at least three contacts on each of a front face and the back face on a lower portion of the circuit board 201, to provide the mix signal input interface LINE, the speech signal output interface POTS, and the data signal output interface DSL. Similarly, the correspondence between the contacts on the lower portion and the corresponding interfaces is arbitrary.

The circuit board 201 is connected with the wiring module 202, such that two pairs of contacts as the mix signal input interface LINE and the speech signal output interface POTS are connected with wire clamps on the wiring module. The circuit board 201 is further connected with the backboard 204 via the connector 203, such that a pair of contacts as the data signal output interface DSL are connected with terminals on the backboard.

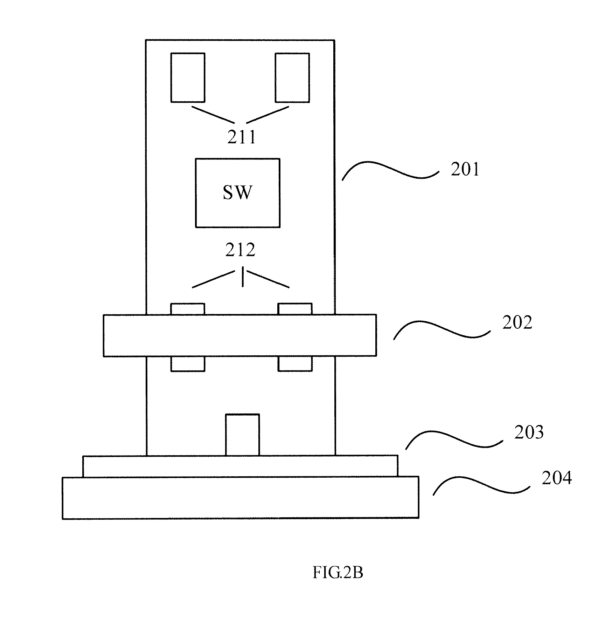

Fig.2B is a diagram of a front face of the signal splitter according to an embodiment of the present utility model.

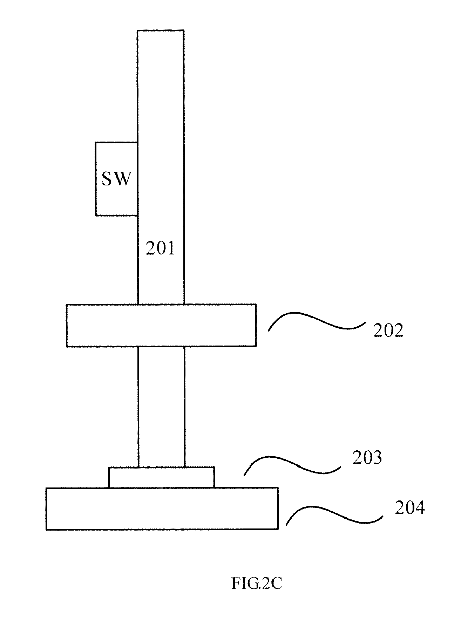

Fig.2C is a diagram of a side face of the signal splitter according to an embodiment of the present utility model.

It should be noted that the signal splitting circuit according to an embodiment of the present utility model can be at any suitable position on the circuit board, so Fig.2A does not show its particular position.

The wiring module, the audio jack, the dip switch, and the connector SW are all well-known devices in the art, so a detailed explanation thereof is omitted, to avoid obscuring the subject matter of the present utility model unnecessarily.

The signal splitter provided according to the present utility model enable simultaneous test of multiple signals in addition to signal splitting function. In particular, the present utility model enables test of data signal/speech signal separately from other circuits.

The above embodiments of the present utility model only exemplify the principle and effect of the utility model, rather than limiting the scope thereof. Those skilled in the art will understand that any changes or improvements without departing from the spirit and scope of the present utility model will fall in the scope of the present utility model. The protection scope of the present utility model is defined by the claims.

## Claims

1. A signal splitting circuit, comprising:
a filter (1) comprising a mix signal input (11, 12) for receiving a mix signal comprising a speech signal and a data signal and a speech signal output (13, 14) for outputting the speech signal separated from the mix signal;
a mix signal input interface (LINE) connected with the mix signal input;
a speech signal output interface (POTS); and
a data signal output interface (DSL),
**characterized in that**:
the signal splitting circuit further comprises a mix signal test interface (Test LINE), a speech signal test interface (Test_POTS), a data signal test interface (Test_DSL), a switch (3, 4) and a further switch (7, 8), wherein:
the mix signal input interface (LINE) is connected with the mix signal test interface (Test_LINE);
the speech signal output interface (POTS) is connected with the speech signal output (13, 14) or the speech signal test interface (Test_POTS) via the switch (3, 4) according to an operation mode of the switch (3, 4); and
the data signal output interface (DSL) is connected with the mix signal input (11, 12) or the data signal test interface (Test_DSL) via the further switch (7, 8) according to an operation mode of the further switch (7, 8).

2. The signal splitting circuit according to claim1, **characterized in that** the mix signal input is connected with the mix signal input interface via an overcurrent protection device.

3. The signal splitting circuit according to claim 1, **characterized in that** the switch and the further switch respectively comprise two single-pole double-throw switches or one double-pole double-throw switch.

4. A signal splitter, comprising: a circuit board (201), **characterized in that** the signal splitter further comprises the signal splitting circuit according to claim 1, wherein:
the signal splitting circuit is arranged on the circuit board (201);
an upper portion of the circuit board ¹¹comprises a first pair and a second pair of contacts (211), wherein the first pair of contacts constitute the mix signal test interface (Test_LINE), and the second pair of contacts constitute the data signal test interface (Test_DSL);
the circuit board (201) further comprises a third pair, a fourth pair, and a fifth pair of contacts, wherein the third pair of contacts constitute the mix signal input interface, the fourth pair of contacts constitute the speech signal output interface, and the fifth pair of contacts constitute the data signal output interface; and
the circuit board further comprises a audio jack, a dip switch, or a connector (SW) for providing the switch (3, 4) and the speech signal test interface (Test_POTS).

5. The signal splitter according to claim 4, **characterized in that** the first pair and the second pair of contacts are two pairs of contacts on a front side and a back side of the circuit board (201).

6. The signal splitter according to claim 4, **characterized in that** it further comprises a wiring module (202), a further connector (203) and a backboard (204), wherein the circuit board is connected with the wiring module (202), the third pair and the fourth pair of contacts are connected with wire clamps on the wiring module, a lower portion of the circuit board is connected with the backboard (204) via the further connector (203), and the fifth pair of contacts are connected with terminals on the backboard.

7. A signal splitter, comprising: a circuit board (210), **characterized in that** the signal splitter further comprises the signal splitting circuit according to claim 1, wherein:
the signal splitting circuit is arranged on the circuit board (201);
an upper portion of the circuit board comprises a first pair and a second pair of contacts (211), wherein the first pair of contacts constitute the mix signal test interface (Test_LINE), and the second pair of contacts constitute the speech signal test interface (Test_POTS);
the circuit board (201) further comprises a third pair, a fourth pair, and a fifth pair of contacts, wherein the third pair of contacts constitute the mix signal input interface, the fourth pair of contacts constitute the speech signal output interface, and the fifth pair of contacts constitute the data signal output interface; and
the circuit board further comprises a audio jack, a dip switch, or a connector (SW) for providing the further switch (7, 8) and the ¹² data signal test interface (Test_DSL).

8. The signal splitter according to claim 7, **characterized in that** the first pair and the second pair of contacts are two pairs of contacts on a front side and a back side of the circuit board (201).

9. The signal splitter according to claim 7, **characterized in that** it further comprises a wiring module (202), a further connector (203) and a backboard (204), wherein the circuit board is connected with the wiring module (202), the third pair and the fourth pair of contacts are connected with wire clamps on the wiring module, a lower portion of the circuit board is connected with the backboard (204) via the further connector (203), and the fifth pair of contacts are connected with terminals on the backboard.
